# EUROPÄISCHE PATENTSCHRIFT

(11) **EP 1 704 389 B1**
(45) Veröffentlichungstag und Bekanntmachung des Hinweises auf die Patenterteilung: **12.03.2008**
(21) Anmeldenummer: 05706867.8
(22) Anmeldetag: 12.01.2005
(51) Int. Cl.: G01D 11/24

(54) **WINKLIGE WANDLEREINHEIT UND VERFAHREN ZU DEREN HERSTELLUNG SOWIE WINKLIGES SCHALTGERÄT UND VORRICHTUNG ZUM NACHWEIS VON OBJEKTEN**
ANGULAR TRANSDUCER UNIT, ASSOCIATED PRODUCTION METHOD AND ANGULAR SWITCHING DEVICE AND DEVICE FOR DETECTING OBJECTS
UNITE TRANSDUCTEUR ANGULAIRE ET SON PROCEDE DE PRODUCTION, ET APPAREIL DE COMMUTATION ANGULAIRE ET DISPOSITIF POUR DETECTER DES OBJETS

(30) Priorität: 14.01.2004 DE 102004002014
(43) Veröffentlichungstag der Anmeldung: 27.09.2006
(73) Patentinhaber: Pepperl + Fuchs GmbH, 68307 Mannheim (DE)
(72) Erfinder: SCHOEN, Dierk, 63329 Egelsbach (DE)
(74) Vertreter: Schiffer, Axel Martin
(86) Internationale Anmeldenummer: PCT/EP2005/000220
(87) Internationale Veröffentlichungsnummer: WO 2005/068941

(56) Entgegenhaltungen:
- DE-A1- 4 442 478
- DE-A1- 10 116 019
- DE-A1- 19 504 608
- DE-U1- 20 106 871

## Beschreibung

Die vorliegende Erfindung betrifft in einem ersten Aspekt ein Verfahren zur Herstellung einer Wandlereinheit für ein winkliges Schaltgerät. In weiteren Aspekten bezieht sich die Erfindung auf eine durch das Verfahren hergestellte Wandlereinheit, auf ein winkliges Schaltgerät und auf eine Vorrichtung zum Nachweis von Objekten.

Winklige Schaltgeräte, d.h. Schaltgeräte, bei denen ein Erfassungs- oder Abstrahlbereich eines Wandlers zur einer Gehäuseachse des Schaltgeräts einen Winkel, beispielsweise 90°, einnimmt, sind z.B. aus DE 201 06 871 U1 bekannt. Ein gattungsgemäßes winkliges Schaltgerät weist folgende Komponenten auf: Eine winklige Wandlereinheit mit einem Wandlerelement, eine Gehäusehülse zur Aufnahme einer Elektronik, wobei die Wandlereinheit an einem ersten Ende der Gehäusehülse angeordnet ist, und ein Anschlussteil, das an einem zweiten Ende der Gehäusehülse angeordnet ist, zur Verbindung mit externen Geräten.

Solche winkligen Schaltgeräte können dort zweckmäßig eingesetzt werden, wo herkömmliche Schaltgeräte mit einem im Wesentlichen in Axialrichtung sich erstreckenden Erfassungs- oder Abstrahlbereich aus Platzgründen nicht verwendet werden können, wo also eine sehr kompakte Anordnung der Schaltgeräte erforderlich oder erwünscht ist.

Eine gattungsgemäße Vorrichtung zum Nachweis von Objekten, insbesondere zum Nachweis von Etiketten, ist in EP 1 067 053 A1 beschrieben. Sender und Empfänger sind dort in einem gabelartigen Gehäuse untergebracht.

Beschreibungen von winkligen Schaltgeräten finden sich außerdem in EP 1 067 053 A1, DE 200 05 283 U1, DE 100 58 480 A1 sowie DE 30 08 309 C2 und DE 10 116 019 A1.

DE 43 28 366 C3 und DE 195 21 361 A1 betreffen axiale Schaltgeräte.

Eine Vorrichtung zur Detektion von Mehrfachbögen ist in US-4,066,969 offenbart.

Bei der Herstellung einer winkligen Wandlereinheit wird ein Wandlerelement in eine gewinkelte Buchse eingesetzt und dort fixiert. Unter einer gewinkelten Buchse wird hier ein röhrenförmiges Bauteil mit einer ersten, axialen Öffnung zur Verbindung mit einer Gehäusehülse eines Schaltgeräts und mit einer sich quer zur Axialrichtung öffnenden zweiten Öffnung, verstanden. Die zweite Öffnung stellt dabei die Eintritts- oder Austrittsöffnung für das Wandlerelement dar.

In Vergleich zu axialen Schaltgeräten ist die relative Positionierung des Wandlerelements relativ zu der Buchse bei einer winkligen Wandlereinheit schwieriger, da dort die Positionierung nicht im Wesentlichen durch eine Zentrierung gegenüber der Gehäuseachse erzielt werden kann.

**Aufgabe** der vorliegenden Erfindung ist es, ein Verfahren zur Herstellung einer winkligen Wandlereinheit für ein winkliges Schaltgerät anzugeben, mit dem solche Wandlereinheiten sehr präzise hergestellt werden können, das einfach und kostengünstig durchzuführen und außerdem für die industrielle Serienproduktion geeignet ist. Weiterhin soll eine winklige Wandlereinheit, ein winkliges Schaltgerät und eine Vorrichtung zum Nachweis von Objekten geschaffen werden, die ebenfalls einfach und präzise herzustellen sind.

Diese Aufgabe wird in einem ersten Aspekt durch das Verfahren mit den Merkmalen des Anspruchs 1 gelöst.

Vorteilhafte Varianten des Verfahrens und bevorzugte Ausführungsformen der erfindungsgemäßen winkligen Wandlereinheit, des winkligen Schaltgeräts und der erfindungsgemäßen Vorrichtung zum Nachweis von Objekten sind Gegenstand der Unteransprüche.

Das Verfahren der oben genannten Art ist erfindungsgemäß dadurch weitergebildet, dass das Wandlerelement mit einer in einem Werkzeug gebildeten Wandleraufnahme in ausgerichteten Eingriff gebracht wird, dass anschließend die Buchse zur präzisen Positionierung bezüglich des Wandlerelements mit einer in dem Werkzeug geeignet ausgebildeten Buchsenaufnahme in ausgerichteten, zumindest teilweise formschlüssigen Eingriff gebracht wird, und dass zur Fertigstellung der Wandlereinheit das Wandlerelement in der Buchse fixiert wird.

Bei der erfindungsgemäßen winkligen Wandlereinheit ist das Wandlerelement - bevor es fixiert wird - in die Buchse mit Spiel aufnehmbar und das Wandlerelement ist gegenüber der Buchse mit Hilfe eines Werkzeugs, insbesondere nach dem erfindungsgemäßen Verfahren, definiert positioniert.

Bei dem erfindungsgemäßen winkligen Schaltgerät ist die winklige Wandlereinheit nach dem erfindungsgemäßen Verfahren hergestellt.

Als ein erster Kerngedanke der Erfindung kann erachtet werden, zum Zusammenbau von Wandlerelement und Buchse ein geeignet geformtes Werkzeug, das auch als Anschlagformstück oder als Schablone bezeichnet werden kann, zu verwenden. In diesem Werkzeug ist eine Wandleraufnahme ausgebildet, mit der das Wandlerelement erfindungsgemäß in einem ersten Verfahrensschritt in ausgerichteten Eingriff gebracht wird.

Ein weiterer Kerngedanke der Erfindung kann darin gesehen werden, dass zur präzisen Positionierung der Buchse bezüglich des Wandlerelements auch die Buchse in ausgerichteten Eingriff mit dem Werkzeug gebracht wird. Hierzu ist das Werkzeug außerdem mit einer geeignet geformten Buchsenaufnahme versehen.

Ein erster wichtiger Vorteil des erfindungsgemäßen Verfahrens besteht darin, dass die Präzision und die Reproduzierbarkeit der Positionierung deutlich erhöht werden kann. Das erfindungsgemäße Verfahren ist daher besonders gut für die industrielle Serienproduktion geeignet.

Ein zweiter bedeutender Vorteil besteht darin, dass das Verfahren mit einfachen Mitteln, d.h. kostengünstig durchgeführt werden kann.

Mit dem erfindungsgemäßen Verfahren kann, wenn das Wandlerelement in der gewinkelten Buchse Spiel hat, dort also nicht formschlüssig aufgenommen ist, die relative Position von Buchse und Wandlerelement präzise und definiert durch geeignete Wahl des Werkzeugs eingestellt werden. Es besteht somit eine hohe Variabilität der Herstellung.

Von Vorteil ist auch, dass bei einer eventuell geänderten relativen Position von Wandlerelement und Buchse nicht die Formwerkzeuge für Wandlerelement und/oder Buchse, sondern lediglich das viel kostengünstigere Positionierwerkzeug gewechselt werden muss.

Bei einer bevorzugten Variante des erfindungsgemäßen Verfahrens wird das Wandlerelement gegenüber dem Werkzeug fixiert. Hierdurch wird die relative Positionierung des Wandlerelements bezüglich der Buchse erleichtert und die Sicherheit wird erhöht.

Das Wandlerelement kann beispielsweise durch Unterdruck, durch Klebemittel, insbesondere ein Klebeband, und/oder durch Magnete, fixiert werden.

Wenn beispielsweise mit demselben Werkzeuggrundkörper Wandlereinheiten hergestellt werden sollen, bei denen unterschiedlich große Wandlerelemente eingesetzt sind, kann es zweckmäßig sein, wenn die Wandleraufnahme zumindest teilweise durch ein Wandlerzentrierstück gebildet wird, das in einen Werkzeuggrundkörper des Werkzeugs eingesetzt oder dort eingelegt wird.

Bei einer besonders bevorzugten Variante des Verfahrens wird ein Wandlerelement zunächst mit Hilfe eines Wandlerzentrierstücks gegenüber dem Werkzeuggrundkörper geeignet ausgerichtet und, beispielsweise durch Unterdruck, fixiert. Anschließend wird das Wandlerzentrierstück wieder entnommen, so dass nach einem Ausschäumen oder Ausgießen der Zwischenräume durch den ausgehärteten Schaum oder das ausgehärtete Gussmaterial, die Wandlerfläche und eine Buchsenbegrenzungsfläche ein ebener Abschluss gebildet wird.

Wenn Wandlereinheiten mit verschieden großen Buchsen mit demselben Werkzeuggrundkörper hergestellt werden sollen, kann es entsprechend zweckmäßig sein, wenn die Buchsenaufnahme zumindest teilweise durch ein Buchsenzentrierstück gebildet wird, das in den Werkzeuggrundkörper eingesetzt oder dort eingelegt wird.

Zusätzliche Sicherheit kann dabei dadurch gewonnen werden, dass das Wandlerzentrierstück und/oder das Buchsenzentrierstück gegenüber dem Werkzeuggrundkörper fixiert wird.

Prinzipiell eignet sich hierfür jede Art der Fixierung. Beispielsweise kann das Wandlerzentrierstück und/oder das Buchsenzentrierstück durch Klebemittel, insbesondere ein Klebeband, und/oder durch Unterdruck, fixiert werden. Besonders einfach durchzuführen ist aber eine Variante des Verfahrens, bei der das Wandlerzentrierstück und/oder das Buchsenzentrierstück durch Magnete fixiert wird.

In diesem Zusammenhang kann es außerdem zweckmäßig sein, auch die Buchse gegenüber dem Werkzeug, insbesondere unter Verwendung einer an dem Werkzeug vorgesehenen Halterung, zu fixieren.

Wenn das Wandlerelement mit Hilfe von Unterdruck gegenüber dem Werkzeuggrundkörper fixiert werden soll, kann das Wandlerelement über mindestens einen Vakuumkanal in dem Werkzeuggrundkörper an das Werkzeug gesaugt werden.

In besonders einfacher Weise kann das Wandlerelement mit der Buchse verbunden werden oder gegenüber der Buchse fixiert werden, wenn Zwischenräume in der Buchse wenigstens teilweise ausgeschäumt oder vergossen werden. Hierfür können bekannte Materialien verwendet werden.

Ein Durchtritt von Schaum oder Vergussmaterial aufgrund einer Saugwirkung des Unterdrucks nach außen und damit einhergehende Probleme bei der relativen Ausrichtung können vermieden werden, wenn über Ausgleichskanäle in dem Werkzeuggrundkörper an radial außen liegenden Bereichen eines angesaugten Wandlerelements ein Druckausgleich erfolgt.

Bei einer besonders bevorzugten Variante des Verfahrens wird ein Werkzeug mit Stufen verwendet, die als Anschlag mit einem stirnseitigen Ende und/oder einem zurückgesetzten Absatz der Buchse in Eingriff kommen. Durch die Stufen kann in einfacher Weise ein zumindest teilweise formschlüssiger Eingriff der Buchse mit dem Werkzeug erzielt werden.

Im Hinblick auf eine Serienfertigung ist es darüber hinaus von Vorteil, wenn mehrere Wandlereinheiten parallel unter Verwendung eines Werkzeugs mit einer Mehrzahl von Wandleraufnahmen und Buchsenaufnahmen hergestellt werden. Beispielsweise eignet sich die stufenartige Variante des Werkzeuggrundkörpers besonders gut zur Ausbildung mit einer Mehrzahl von Wandler- und Buchsenaufnahmen.

Um den Einfluss von störender Strahlung auf das Wandlerelement im Betrieb zu vermeiden, kann die Buchse innen zumindest teilweise metallisiert werden oder ein durch formschlüssigen Eingriff in die Buchse eingepresster Schirmbecher verwendet werden.

Ein besonders stabiler Aufbau und eine definierte Ausrichtung der Komponenten wird erreicht, wenn der Schirmbecher auf einer Leiterplatte befestigt, insbesondere verlötet, wird.

In diesem Zusammenhang ist es außerdem zweckmäßig, das Wandlerelement mit dem Schirmbecher, insbesondere über eine an diesem vorgesehene Lasche, zu verlöten.

Ergänzend oder alternativ kann die Buchse mit einer Leiterplatte in einen form- und/oder kraftschlüssigen Eingriff, insbesondere einen rastenden Eingriff, gebracht werden.

Die Funktionalität der Wandlereinheiten kann erhöht werden, wenn mehrere Wandlerelemente in eine gewinkelte Buchse eingesetzt und dort fixiert werden.

Die erfindungsgemäße Wandlereinheit kann prinzipiell sowohl als Sender wie auch als Empfänger dienen. Beispielsweise kann das Wandlerelement einen beliebigen Sensor, insbesondere einen induktiven, optischen, kapazitiven, Temperatur-, Druck- und/oder Ultraschallsensor, aufweisen.

Besonders nutzbringend lässt sich eine erfindungsgemäße Wandlereinheit bei einem als Näherungsschalter ausgebildeten Schaltgerät einsetzen, der tastend und/oder im Schrankenbetrieb arbeitet.

Unter einem tastenden Schaltgerät wird hier eine Vorrichtung verstanden, bei der von einem Wandler ein Signal ausgesandt und gleichzeitig oder eventuell zeitlich versetzt der "Response" durch ein eventuell vorhandenes Objekt nachgewiesen wird. Im Gegensatz dazu sind bei einer Schranke, beispielsweise bei einer Zählschranke, ein separater Sender und ein separater Empfänger vorhanden.

Unerwünschte Einstrahlungen auf das erfindungsgemäße Schaltgerät können außerdem dadurch reduziert oder vermieden werden, wenn in der Gehäusehülse des Schaltgeräts zur Abschirmung eine Schirmhülse vorgesehen ist.

Ein solches Schaltgerät wird bevorzugt in einem einzügigen Verfahren, wie beispielsweise in der deutschen Patentanmeldung Nr. 103 59 885.5 beschrieben, hergestellt.

Die Ausrichtung des Schaltgeräts wird erleichtert, wenn die Gehäusehülse eckig, insbesondere im Profil quadratisch, ist. Demgegenüber ermöglicht eine zylindrische Gehäusehülse eine variable bzw. eine in der Näherungschaltertechnik standardisierte Positionierung eines Schaltgeräts.

Das erfindungsgemäße Schaltgerät gestattet eine sehr hohe Funktionalität. Insbesondere kann das Schaltgerät als Sender und/oder Empfänger ausgebildet sein. Außerdem können mehrere Wandlerelemente, gegebenenfalls auch in mehreren Buchsen, vorgesehen sein.

Die Vorteile des erfindungsgemäßen Schaltgeräts können besonders nutzbringend bei einer Vorrichtung zum Nachweis von Objekten mit mindestens einem Sender zum Aussenden eines Messsignals in einen Nachweisbereich und mit mindestens einem Empfänger zum Empfangen eines Empfangssignals aus dem Nachweisbereich eingesetzt werden, wobei der Sender und/oder der Empfänger als erfindungsgemäßes winkliges Schaltgerät ausgebildet ist. Hierbei sind sowohl Sender als auch Empfänger in eckiger, insbesondere im Profil quadratischer bzw. zylindrischer Gehäuseform möglich.

In besonders vorteilhafter Weise kann bei Forderung nach einem sehr kompakten Einbau eine Auswerteeinheit vorgesehen sein, wobei der Sender, der Empfänger und die Auswerteeinheit in jeweils getrennten Gehäusen untergebracht sind. Sender und Empfänger sind also von der Auswerteeinheit abgesetzt.

In vorteilhafter und besonders kostengünstiger Weise werden die Wandlerelemente in einer separaten und sehr kurzen Buchse (ca. 8-12 mm), die auch als Wandleraufnahme bezeichnet werden kann, orthogonal zur Leiterplattenebene direkt montiert. Um hierbei Kosten zu sparen, wird die Wandlereinheit wie ein elektromechanisches Bauelement behandelt, welches auf die Leiterplatte über mindestens eine Lasche an dem buchsenförmigen Schirmbecher aufgelötet werden kann. Eine mechanische Ausrichtung insbesondere die Parallelität erfolgt über die flächig auf der Leiterplatte aufliegende Wandleraufnahme. Zur Vermeidung einer unzulässigen Belastung der Lötstellen in besonderen Fällen kann die Wandleraufnahme auch über Stifte und/oder Rastnasen verfügen, welche in die Leiterplatte eingreifen, diese mechanisch fixieren und zugleich einen Anschlag zur Leiterplatte bilden. Zusätzliche Festigkeit kann über eine klebende Fixierung von Wandleraufnahme und/oder des buchsenförmigen Schirmbechers erreicht werden. Sofern ein metallischer Schirmbecher nicht notwendig ist oder nicht eingesetzt werden darf, ist alternativ ein dergestalt buchsenartig geformter Becher einzusetzen, welcher über einen rastenden Eingriff mit der Leiterplatte verfügt.

Eine solche Vorrichtung eignet sich insbesondere zum Nachweis bzw. der Erkennung von Einfach-, Fehl- und/oder Mehrfachbögen, beispielsweise in Druckmaschinen. Hierfür wird als Sender zweckmäßig ein Ultraschall- und/oder ein optischer Sender und/oder ein kapazitiver Sensor vorgesehen, wobei der Empfänger dann mit entsprechenden Ultraschall- und/oder optischen Sensoren auszubilden ist, bzw. bei einem kapazitiven Sensor ein exakt ausgerichtetes Kondensatorelement ausgebildet werden muss.

Des Weiteren kann eine Versorgung von Sender und Empfänger ebenfalls separat erfolgen, so dass eine Verbindung von der Sendereinheit zur Empfängereinheit nicht zwangsweise gegeben sein muss. Dies kann vor allem dann notwendig werden, sobald große Entfernungen mit der gewinkelten Schrankenanordnung überbrückt werden müssen oder sehr breite Objekte vermessen werden sollen, insbesondere Papierbahnen.

Durch die winklige Gestalt der Schaltgeräte kann diese Vorrichtung besonders kompakt aufgebaut werden, so dass auch neue Einsatzbereiche erschlossen werden.

Eine definierte relative Positionierung kann in besonders einfacher Weise dadurch erreicht werden, dass der Sender und der Empfänger in einer gemeinsamen Halterung angeordnet sind.

Da die Elektronik für den Sender im Normalfall weniger Platz beansprucht als die Elektronik für den Empfänger, kann bei einer kostengünstigen Variante der Sender als axiales Schaltgerät ausgebildet sein.
Weitere Vorteile und Merkmale des erfindungsgemäßen Verfahrens, der winkligen Wandlereinheit, des winkligen Schaltgeräts und der Vorrichtung zum Nachweis von Objekten werden nachstehend unter Bezugnahme auf die beigefügten schematischen Figuren beschrieben.

Dort zeigen:
- Fig. 1:: in Draufsicht ein Werkzeug zur Durchführung des erfindungsgemäßen Verfahrens;
- Fig. 2:: das Werkzeug aus Fig. 1 in einer Ansicht von vorn;
- Fig. 3:: das Werkzeug aus Fig. 1 in einer Schnittansicht entlang der Linien 3 - 3:
- Fig. 4:: in Draufsicht ein Buchsenzentrierstück zum Einlegen in das in Fig. 1 gezeigte Werkzeug;
- Fig. 5:: das Buchsenzentrierstück aus Fig. 4 in einer Schnittansicht entlang der Linien 5 - 5;
- Fig. 6:: das in Fig. 4 gezeigte Buchsenzentrierstück in einer Schnittansicht entlang der Linien 6 - 6;
- Fig. 7:: eine Schnittansicht des Werkzeugs aus Fig. 1 entsprechend Fig. 3 mit eingelegtem Buchsenzentrierstück;
- Fig. 8:: eine Schnittansicht entsprechend Fig. 7 mit eingesetztem Wandlerelement und in Anschlag gebrachter Buchse;
- Fig. 9:: in einer Teilschnittansicht ein an dem Werkzeug durch Unterdruck fixiertes Wandlerelement mit Buchse;
- Fig. 10:: in einer Teilschnittansicht ein an dem Werkzeug durch Unterdruck fixiertes Wandlerelement mit Buchse;
- Fig. 11 bis 13:: Beispiele für den Einsatz der erfindungsgemäßen winkligen Schaltgeräte in Vorrichtungen zum Nachweis von Objekten;
- Fig. 14:: in einer perspektivischen Ansicht ein Ausführungsbeispiel einer Vorrichtung zum Nachweis von Objekten, insbesondere Einfach-, Fehl- oder Mehrfachbögen;
- Fig. 15:: die in Fig. 14 gezeigte Vorrichtung in Draufsicht.

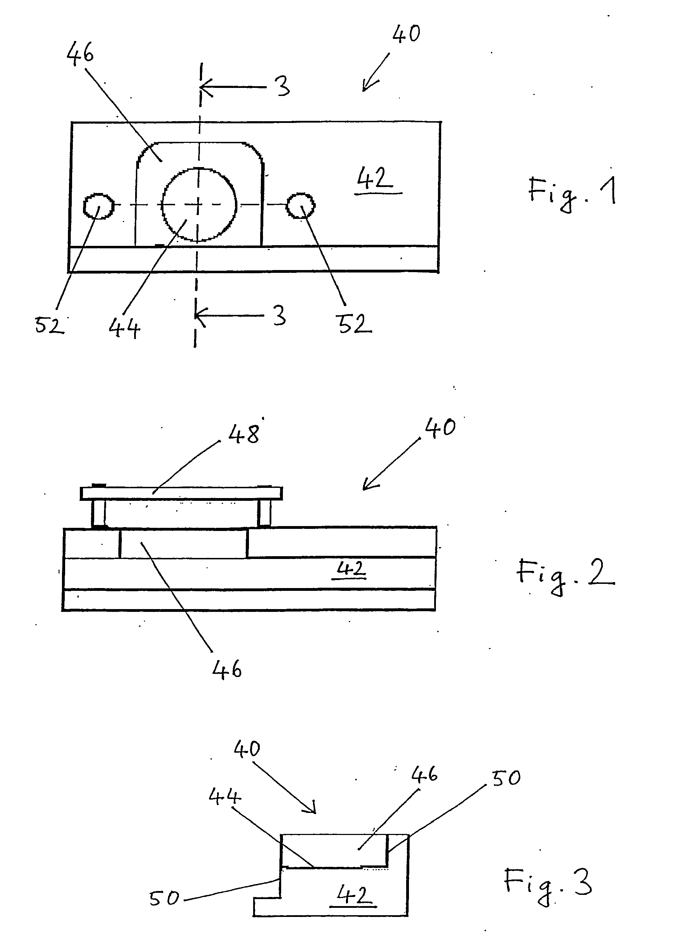

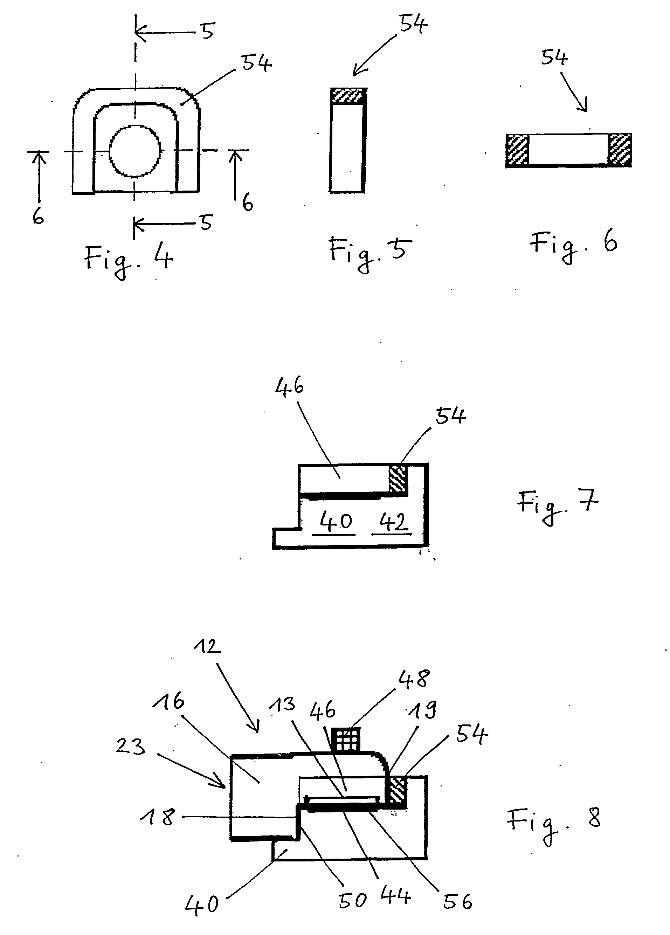

Das erfindungsgemäße Verfahren zur Herstellung einer winkligen Wandlereinheit 12 wird nachstehend mit Bezug auf die Fig. 1 bis 8 beschrieben. Ein dabei zum Einsatz kommendes Werkzeug 40 ist in den Fig. 1 bis 3 in verschiedenen Darstellungen gezeigt. Dieses Werkzeug 40 besteht im Wesentlichen aus einem Werkzeuggrundkörper 42, der beispielsweise aus Stahl gefertigt ist. In diesen Werkzeuggrundkörper 42 ist eine Buchsenaufnahme 46 eingearbeitet, die im gezeigten Beispiel eine im Wesentlichen quadratische Grundfläche mit abgerundeten Ecken aufweist. Innerhalb dieser Buchsenaufnahme 46 ist eine Wandleraufnahme 44 als kreisscheibenförmige Vertiefung ausgebildet. Zur Fixierung einer Buchse in der Buchsenaufnahme 46 ist, wie in Fig. 2 gezeigt, eine Halterung 48 vorgesehen, die mit Hilfe von Magneten 52 an dem Werkzeuggrundkörper 42 gehalten wird. Wie aus Fig. 3 ersichtlich, weist der Werkzeuggrundkörper 42 im Bereich der Buchsenaufnahme 46 ein gestuftes, treppenartiges Profil mit zwei Stufen 50 auf, die, wie beispielsweise in Fig. 8 gezeigt, mit einer Buchse 16 in ausgerichteten Eingriff kommen können.

In den Fig. 4 bis 6 ist ein in die Buchsenaufnahme 46 des Werkzeuggrundkörpers 42 einzusetzendes oder einzulegendes Buchsenzentrierstück 54 gezeigt, das eine U-Form aufweist. Dieses Buchsenzentrierstück 54 kann ebenfalls aus Stahl gefertigt sein. In Fig. 7 ist eine Querschnittsansicht des Werkzeugs 40 mit eingelegtem Buchsenzentrierstück 54 wiedergegeben.

Eine entsprechende Schnittansicht mit einer mit dem Werkzeug 40 in Anschlag gebrachten Buchse 16 ist in Fig. 8 gezeigt. Dort ist außerdem ein Wandlerelement 13 mit Hilfe einer Klebefolie 56 in der Wandleraufnahme 44 ausgerichtet fixiert. Zur Aufnahme der Klebefolie 56 ist die Wandleraufnahme 44 als etwa 0,1 mm tiefe Vertiefung ausgebildet. Ein Buchsenzentrierstück 54 ist in den Werkzeuggrundkörper 42 eingesetzt und bildet für die Buchse 16 die Buchsenaufnahme 46. Wie aus Fig. 8 ersichtlich, kommt ein stirnseitiges Ende 19 der Buchse 16 mit einer Innenseite des Buchsenzentrierstücks 54 sowie ein zurückgesetzter Absatz 18 der Buchse 16 mit einer Stufe 50 des Werkzeuggrundkörpers 42 in Anschlag. Hierdurch wird eine präzise ausgerichtete Positionierung der Buchse 16 bezüglich des Werkzeugs 40 erzielt. Auf den Anschlag des zurückgesetzten Absatzes 18 mit der Stufe 50 wird verzichtet, wenn dieser Absatz 18 bedingt durch die Herstellung der Buchse 16 nicht präzise definiert ist. Die Buchse 16 ist schließlich mit der Halterung 48 gegenüber dem Werkzeug 40 fixiert, so dass in der in Fig. 8 gezeigten Situation die Herstellung der Wandlereinheit 12 durch Verbinden des Wandlerelements 13 mit der Buchse 16, beispielsweise durch Ausschäumen der vorhandenen Zwischenräume, fertiggestellt werden kann.

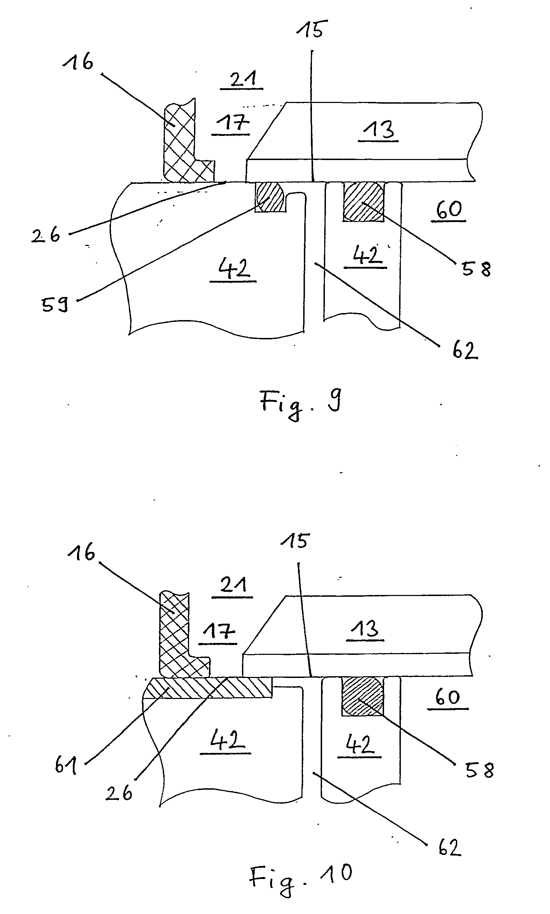

Verfahrensvarianten, bei denen das Wandlerelement 13 durch Unterdruck gegenüber dem Werkzeuggrundkörper 42 fixiert wird, werden unter Bezugnahme auf die Fig. 9 und 10 erläutert. Fig. 9 zeigt in einer Teilschnittansicht eine Verfahrenssituation, bei der ein Wandlerelement 13 und eine Buchse 16 an einen Werkzeuggrundkörper 42 an- oder in diesen eingelegt sind. Eine präzise Ausrichtung der Buchse 16 kann dabei wie oben im Zusammenhang mit Fig. 8 erläutert erfolgen. Das Wandlerelement 13 wird jeweils über einen in einem Vakuumkanal 60 erzeugten Unterdruck gegen den Werkzeuggrundkörper 42 gesaugt. Eine Dichtung 58 ist in eine umlaufende Nut in dem Werkzeuggrundkörper 42 eingelegt und sorgt für hinreichende Vakuumdichtigkeit. Die Dichtung 58, bei der es sich beispielsweise um einen O-Ring handeln kann, dient also zur Abdichtung der Wandlerfläche.

Wenn das Wandlerelement 13 bezüglich der Buchse 16 korrekt positioniert ist, werden zur Fixierung des Wandlerelements 13 bezüglich der Buchse 16 die vorhandenen Zwischenräume 21 mit einer Ausschäumung 17 versehen. Hierzu wird durch eine rückwärtige Öffnung 23 der Buchse (siehe Fig. 8) eine Schaumdüse in die Buchse 16 eingeführt. Die Buchse 16 wird daher möglichst kurz ausgebildet. Um ein Übertreten des Schaums über die durch das Wandlerelement 13 und die Buchse 16 definierte Fläche 26 zu verhindern, wird der Übergangsbereich zwischen Wandlerelement 13 und Werkzeuggrundkörper 42 zusätzlich abgedichtet. Hierzu ist bei der in Fig. 9 gezeigten Variante eine weitere Dichtung 59, die ebenfalls in eine umlaufende Nut in den Werkzeuggrundkörper 42 eingelegt ist, vorgesehen. Während durch die Dichtung 58 eine Vakuumdichtigkeit bereitgestellt wird, sorgt die Dichtung 59, bei der es sich beispielsweise um einen O-Ring aus einem sehr weichen Silikon handeln kann, für eine hinreichende Schaumabdichtung bzw. Restdruckabdichtung zur Vermeidung einer Sogwirkung auf das liquide Füllmaterial, insbesondere den Schaum. Bevorzugt wird diese Dichtung 59 daher bezüglich des Wandlerelements 13 radial möglichst weit nach außen gesetzt. Die Dichtungen 58 und 59 müssen sorgfältig aufeinander abgestimmt werden, damit in jedem Fall auch die Dichtung 59 noch heruntergedrückt wird und daher sowohl eine hinreichende Vakuum- als auch eine Schaumdichtigkeit gewährleistet sind. In der Praxis besteht die Dichtung 59 aus einem weicheren Material als die Dichtung 58.

Bei der in Fig. 10 illustrierten Ausführungsform wird der Bereich zwischen Wandlerelement 13 und Werkzeuggrundkörper 42 zur Erzielung einer geeigneten Schaumdichtigkeit über eine Gummiunterlage 61 abgedichtet.
Einem Unterschäumen des Wandlerelements 13 wird in den gezeigten Beispielen außerdem dadurch vorgebeugt, dass in Ausgleichskanälen 62, die die Vakuumkanäle 60 radial umgeben, ein Druckausgleich erfolgt. D.h. zwischen den zu verschäumenden Zwischenräumen 21 und den Druckausgleichskanälen 62 besteht praktisch kein Druckgradient, so dass beim Anpressen einer Wandlerkeramik durch Vakuum kein Saugdruck auf den Schaum ausgeübt wird. Als wesentlicher Vorteil kann hierdurch erreicht werden, dass der ausgehärtete Schaum, die Wandlerfläche und die Begrenzungsfläche der Buchse 16 einen ebenen und gut definierten Abschluss bilden. Die Güte dieser Ebene ist dann im Wesentlichen durch die Fertigung der Wandleroberfläche und/oder der Buchsenoberfläche begrenzt.

Eventuelle Schaumreste lassen sich gegebenenfalls mit einer Durchstechform entfernen.

Eine präzise Ausrichtung des Wandlerelements 13 kann mit Hilfe einer in den Fig. 9 und 10 nicht dargestellten Zentrierschablone, die auch als Wandlerzentrierstück bezeichnet werden kann, erfolgen. Eine solche Zentrierschablone kann in den Werkzeuggrundkörper 42 ein- oder an diesen angelegt werden und ein Wandlerelement 13 kann dann in ausgerichteten Eingriff mit dieser Zentrierschablone gebracht werden, d.h. im einfachsten Fall in diese eingelegt werden. Davor oder danach kann das Vakuum zugeschaltet werden, so dass das Wandlerelement 13 an den Werkzeuggrundkörper 42 gesaugt wird. Anschließend kann die Zentrierschablone abgezogen werden, so dass nach dem Verschäumen die Wandlerfläche, die Begrenzungsfläche der Buchse und der ausgehärtete Schaum einen ebenen Abschluss bilden können.

Der Werkzeuggrundkörper 42 kann zum Abheben der Zentrierschablone oder der Zentriermechanik mit einer geeigneten Führung, die insbesondere die Parallelität des Abzugs gewährleistet, versehen sein.

Mit dem Verfahren kann also eine saubere, gut definierte Begrenzungsfläche des Wandlerelements 13, bei dem es sich beispielsweise um eine Piezoelement handeln kann, der Begrenzungsfläche der Buchse 16 und dem ausgehärteten Schaum erzielt werden. Eine einfache Zentrierung der Piezokeramik per Hand oder maschinell kann, wie beschrieben, durch eine Zentrierschablone, die auch als Wandlerzentrierstück bezeichnet werden kann, erfolgen. Diese Zentrierschablone kann, beispielsweise nach dem Ansaugen des Wandlerelements 13 oder auch nach einem Anhaften des Wandlerelements 13 an einer Klebefolie, leicht entfernt werden. Danach kann die Buchse 16 maschinell, insbesondere über einen Saugheber, angedrückt und gegenüber der Buchsenaufnahme 46 in dem Werkzeug 40 ausgerichtet werden. Insgesamt wird dadurch eine automatisierte Produktion, also eine Serienfertigung, ermöglicht.

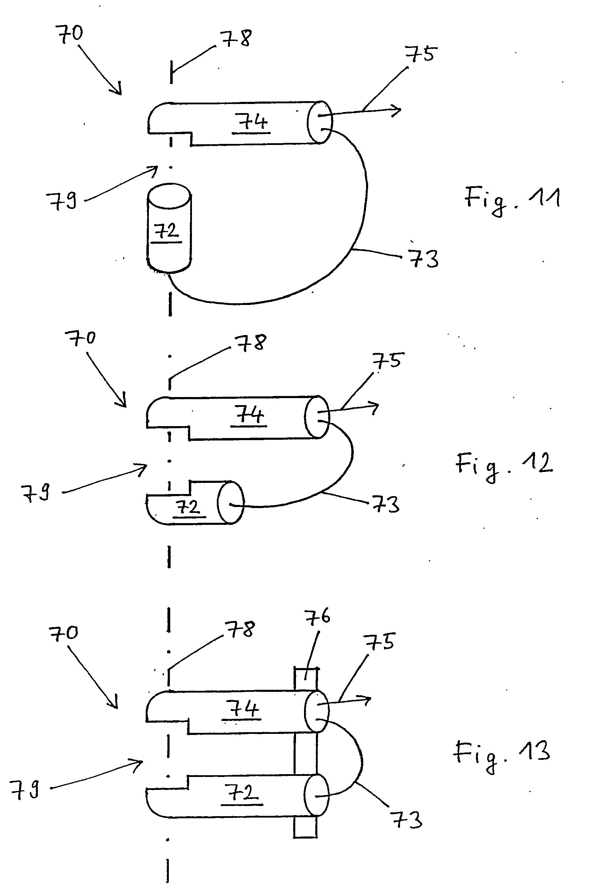

Verschiedene Varianten von Vorrichtungen 70 zum Nachweis von Objekten sind in den Fig. 11 bis 15 dargestellt. Bei jeder dieser Vorrichtungen 70 ist ein Sender 72 zum Aussenden eines Messsignals in einen Nachweisbereich 79 und ein Empfänger zum Empfangen eines Empfangssignals aus dem Nachweisbereich 79 vorgesehen. Bei den gezeigten Varianten ist jeweils der Sender 72 so gegenüber dem Empfänger 74 angeordnet, dass der Abstrahlbereich des Senders 72 und der Empfangsbereich des Empfängers 74 im Wesentlichen symmetrisch zu einer gemeinsamen Achse 78 liegen. Prinzipiell sind, je nach Wechselwirkung der nachzuweisenden Objekte mit der eingestrahlten Strahlung, auch andere Anordnungen möglich.

Bei den in den Fig. 11 bis 13 gezeigten Beispielen wird die Transmission durch ein im Nachweisbereich 79 befindliches Objekt oder die Abschattung der Strahlung durch dieses Objekt gemessen. Wenn in einer alternativen Ausgestaltung die Reflexion durch ein nachzuweisendes Objekt gemessen werden soll, werden Sender und Empfänger in einer durch das Reflexionsgesetz bestimmten Geometrie angeordnet.

Bei den drei gezeigten Varianten ist jeweils der Sender 72 mit einer Verbindungsleitung 73 mit dem Empfänger 74 verbunden, der seinerseits über eine Leitung 75 an die entsprechenden Versorgungs- und Auswerteeinheiten angeschlossen ist.

Bei dem in Fig. 11 gezeigten Beispiel ist der Sender 72 in axialer Bauform ausgebildet, was sich kostengünstig realisieren lässt.

Ein besonders kompaktes Beispiel einer Vorrichtung zum Nachweis von Objekten 70 ist in Fig. 12 gezeigt, wo sowohl der Sender 72 als auch der Empfänger 74 als winkliges Schaltgerät gemäß der Erfindung ausgebildet ist.

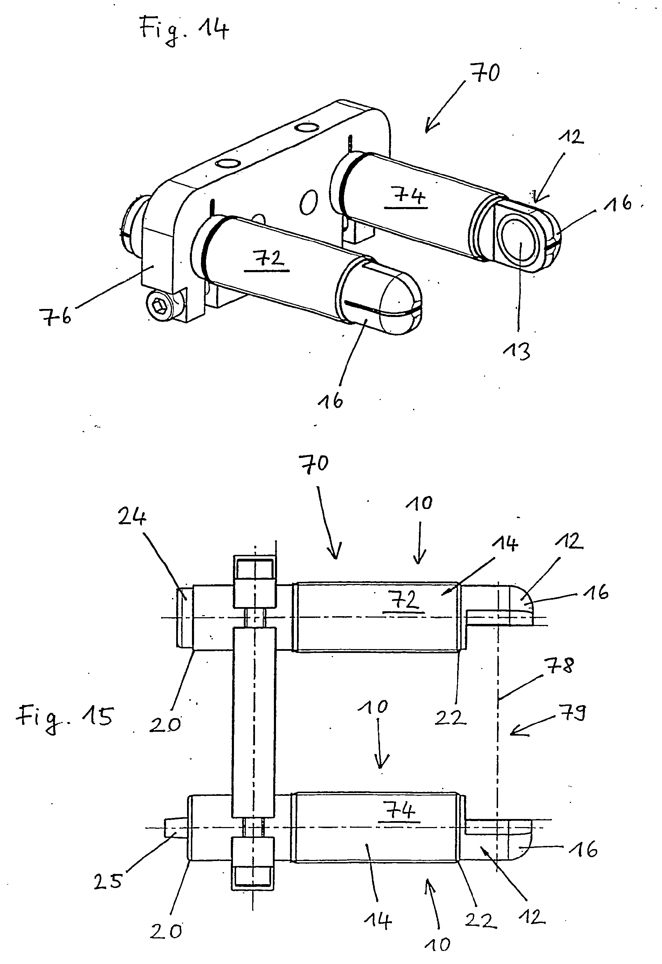

Eine Abwandlung des Beispiels aus Fig. 12 ist in Fig. 13 dargestellt. Dort sind der Sender 72 und der Empfänger 74 in einer gemeinsamen Halterung 76 angeordnet, wodurch eine präzise relative Orientierung von Sender 72 und Empfänger 74 in leichter Weise möglich ist. Dieses Beispiel ist in den Fig. 14 und 15 genauer dargestellt, wobei die entsprechenden Komponenten jeweils mit denselben Bezugszeichen versehen sind.

Aus Fig. 15 ist der prinzipielle Aufbau der winkligen Schaltgeräte 10 ersichtlich. In eine Gehäusehülse 14 ist an einem Vorderende 22 eine erfindungsgemäß hergestellte Wandlereinheit 12 eingeführt. An einem Hinterende 20 der Gehäusehülse 14 ist ein Anschlussteil 24 bzw. 25 angeordnet, über welches eine Elektronik in der Gehäusehülse 14 mit externen Versorgungs- und Auswerteeinrichtungen verbunden ist. Diese Schaltgeräte 10 können vorteilhaft durch ein einzügiges Verfahren, wie es beispielsweise in der deutschen Patentanmeldung Nr. 103 59 885.5 beschrieben ist, hergestellt werden. Dabei wird zunächst aus der Wandlereinheit 12, einem Träger mit einer elektronischen Schaltung, einer Abschirmhülse und dem Anschlussteil 24, 25 eine Baugruppe gebildet, die dann vom Vorderende 22 der Gehäusehülse 14 her in diese eingeschoben wird. Besondere Zentriermaßnahmen sind dabei nicht mehr erforderlich.

Die Anschlussteile 24, 25 können bevorzugt voll transparent ausgeführt werden, so dass über geeignete Leuchtmittel eine Zustandsanzeige nach außen erfolgen kann. Die transparente Ausbildung ermöglicht dann eine Quasi-Rundumsichtbarkeit, wie diese beispielsweise in der deutschen Patentanmeldung Nr. 103 43 529.8 beschrieben ist.

Die in den Fig. 11 bis 15 gezeigten Varianten von Vorrichtungen zum Nachweis von Objekten 70 können beispielsweise als Ultraschall-Schranken mit Ultraschall-Sendern 72 und Ultraschall-Empfängern 74 ausgebildet sein. Solche Ultraschall-Schranken und -Sensoren werden vor allem bei Papier verarbeitenden Maschinen, wie Scannern, Kopierern und Papierschnittmaschinen, eingesetzt. Allgemeiner gesprochen kann zum Nachweis der entsprechenden Papierbögen, d.h. insbesondere zum Nachweis von Einfach-, Mehrfach- und/oder Fehlbögen, hochfrequenter Schall eingesetzt werden.

Bei alternativen Varianten werden lichttechnische Sensoren eingesetzt, oder es wird eine Kapazitätsmessung durchgeführt. Die winklig angeordneten Sensoren ermöglichen insbesondere bei Maschinen, bei denen die Platzverhältnisse sehr begrenzt sind, vor allem bei geringer Bauhöhe, eine sehr gute Einbaulösung. Kostengünstig, aber immer noch sehr kompakt ist die in Fig. 11 gezeigt Variante, bei der der Sender 72 in einer etwa 20 mm langen Gehäusehülse untergebracht ist.

## Patentansprüche

1. Verfahren zur Herstellung einer winkligen Wandlereinheit für ein winkliges Schaltgerät (10),
bei dem ein Wandlerelement (13) in eine gewinkelte Buchse (16) eingesetzt und dort fixiert wird,
**dadurch gekennzeichnet,**
**dass** das Wandlerelement (13) mit einer in einem Werkzeug (40) gebildeten Wandleraufnahme (44) in ausgerichteten Eingriff gebracht wird,
**dass** anschließend die Buchse (16) zur präzisen Positionierung bezüglich des Wandlerelements (13) mit einer in dem Werkzeug (40) geeignet ausgebildeten Buchsenaufnahme 46) in ausgerichteten, zumindest teilweise formschlüssigen Eingriff gebracht wird,
**dass** zur Fertigstellung der Wandlereinheit (12) das Wandlerelement (13) in der Buchse (16) fixiert wird,
**dass** die Wandleraufnahme (44) zumindest teilweise durch ein Wandlerzentrierstück gebildet wird, das in einen Werkzeuggrundkörper (42) des Werkzeugs (40) eingesetzt oder dort eingelegt wird und/oder
**dass** die Buchsenaufnahme (46) zumindest teilweise durch ein Buchsenzentrierstück (54) gebildet wird, das in den Werkzeuggrundkörper (42) eingesetzt oder dort eingelegt wird.

2. Verfahren nach Anspruch 1,
**dadurch gekennzeichnet,**
**dass** das Wandlerelement (13) gegenüber dem Werkzeug (40) fixiert wird.

3. Verfahren nach Anspruch 2,
**dadurch gekennzeichnet,**
**dass** das Wandlerelement (13) durch Unterdruck, durch Klebemittel, insbesondere ein Klebeband (56), und/oder durch Magnete fixiert wird.

4. Verfahren nach einem der Ansprüche 1 bis 3,
**dadurch gekennzeichnet,**
**dass** das Wandlerzentrierstück und/oder das Buchsenzentrierstück (54) gegenüber dem Werkzeuggrundkörper (42) fixiert wird bzw. werden. -

5. Verfahren nach einem der Anspruch 4,
**dadurch gekennzeichnet,**
**dass** das Wandlerzentrierstück und/oder das Buchsensentrierstück (54) durch Klebemittel, insbesondere ein Klebeband, durch Unterdruck und/oder durch Magnete (52) fixiert wird bzw. werden.

6. Verfahren nach einem der Ansprüche 3 bis 5,
**dadurch gekennzeichnet,**
**dass** das Wandlerelement (13) über mindestens einen Vakuumkanal (60) in dem werkzeuggrundkörper (42) an das Werkzeug (40) gesaugt wird.

7. Verfahren nach einem der Ansprüche 3 bis 6,
**dadurch gekennzeichnet,**
**dass** über Ausgleichskanäle (62) in dem Werkzeuggrundkörper (42) an radial außen liegenden Bereichen (15) eines angesaugten Wandlerelements (13) ein Druckausgleich erfolgt.

8. Verfahren nach einem der Ansprüche 1 bis 7,
**dadurch gekennzeichnet,**
**dass** das Wandlerzentrierstück vor dem Fixieren des Wandlerelements (13) in der Buchse (16) entfernt wird.

9. Verfahren nach einem der Ansprüche 1 bis 8,
**dadurch gekennzeichnet,**
**dass** das Wandlerelement (13) in der Buchse (16) durch wenigstens teilweises Ausschäumen und/oder Vergießen von Zwischenräumen (21) fixiert wird.

10. Verfahren nach einem der Ansprüche 1 bis 9,
**dadurch gekennzeichnet,**
**dass** ein Werkzeug (40) mit Stufen (50) verwendet wird, die als Anschlag mit einem stirnseitigen Ende (19) und/oder einem zurückgesetzten Absatz (18) der Buchse (16) in Eingriff kommen.

11. Verfahren nach einem der Ansprüche 1 bis 10,
**dadurch gekennzeichnet,**
**dass** mehrere Wandlereinheiten (13) parallel unter Verwendung eines Werkzeugs mit einer Mehrzahl von Wandleraufnahmen und Buchsenaufnahmen hergestellt werden.

12. verfahren nach einem der Ansprüche 1 bis 11,
**dadurch gekennzeichnet,**
**dass** die Buchse (16) gegenüber dem Werkzeug (40), insbesondere unter Verwendung einer an dem Werkzeug (40) vorgesehenen Halterung (48), fixiert wird.

13. Verfahren nach einem der Ansprüche 1 bis 12,
**dadurch gekennzeichnet,**
**dass** mehrere Wandlerelemente (13) in eine gewinkelte Buchse (16) eingesetzt und dort fixiert werden.

14. Verfahren nach einem der Ansprüche 1 bis 13,
**dadurch gekennzeichnet,**
**dass** in die Buchse (16) ein Schirmbecher formschlüssig eingepresst wird.

15. Verfahren nach Anspruch 14,
**dadurch gekennzeichnet,**
**dass** der Schirmbecher auf einer Leiterplatte befestigt, insbesondere verlötet, wird.

16. Verfahren nach einem der Ansprüche 14 oder 15,
**dadurch gekennzeichnet,**
**dass** die Wandlereinheit (12) mit dem Schirmbecher, insbesondere über mindestens eine an diesem vorgesehene Lasche, verlötet wird.

17. Verfahren nach einem der Ansprüche 1 bis 16,
**dadurch gekennzeichnet,**
**dass** die Buchse (16) mit einer Leiterplatte in einen form- und/oder kraftschlüssigen Eingriff, insbesondere einen rastenden Eingriff, gebracht wird.

## Claims

1. Method for the manufacture of an angular transducer unit for an angular switching device (10),
in which a transducer element (13) is inserted and fixed in an angled bush (16),
**characterized in**
**that** the transducer element (13) is brought into aligned engagement with a transducer receptacle (44) formed in a tool (40),
**that** for the precise positioning with respect to the transducer element (13), the bush (16) is then brought into aligned, at least partial positive engagement with a bush receptacle (46) appropriately formed in the tool (40),
**that** for completing the transducer unit (12) the transducer element (13) is fixed in the bush (16),
**that** the transducer receptacle (44) is at least partly formed by a transducer centring device, which is inserted or engaged in a tool body (42) of the tool (40) and/or
**that** the bus receptacle (46) is at least partly formed by a bush centring device (54), which is inserted or engaged in the tool body (42).

2. Method according to claim 1,
**characterized in that**
the transducer element (13) is fixed relative to the tool (40).

3. Method according to claim 2,
**characterized in that**
the transducer element (13) is fixed by vacuum, adhesives, particularly an adhesive tape (56), and/or by magnets.

4. Method according to one of the claims 1 to 3,
**characterized in that**
the transducer centring device and/or the bush centring device (54) is fixed relative to the tool body (42).

5. Method according to claim 4,
**characterized in that**
the transducer centring device and/or the bush centring device (54) is fixed by adhesives, particularly an adhesive tape, by vacuum and/or by magnets (52).

6. Method according to one of the claims 3 to 5,
**characterized in that**
the transducer element (13) is sucked onto the tool (40) by means of at least one vacuum duct (60) in the tool body (42).

7. Method according to one of the claims 3 to 6,
**characterized in that**
a pressure compensation takes place on radially outer areas (15) of a sucked on transducer element (13) by means of compensating ducts (62) in the tool body (42).

8. Method according to one of the claims 1 to 7,
**characterized in that**
the transducer centring device is removed prior to fixing the transducer element (13) in the bush (16).

9. Method according to one of the claims 1 to 8,
**characterized in that**
the transducer element (13) is fixed in the bush (16) by at least partly filling gaps (21) with foam and/or moulding material.

10. Method according to one of the claims 1 to 9,
**characterized in that**
use is made of a tool (40) with steps (50), which as a stop engages with a front end (19) and/or a setback shoulder (18) of the bush (16).

11. Method according to one of the claims 1 to 10,
**characterized in that**
several transducer units (13) are manufactured in parallel using one tool with a plurality of transducer receptacles and bush receptacles.

12. Method according to one of the claims 1 to 11,
**characterized in that**
the bush (16) is fixed relative to the tool (40), particularly using a holder (48) provided on the tool (40).

13. Method according to one of the claims 1 to 12,
**characterized in that**
several transducer elements (13) are inserted and fixed in an angled bush (16).

14. Method according to one of the claims 1 to 13,
**characterized in that**
a shielding can is positively pressed into the bush (16).

15. Method according to claim 14,
**characterized in that**
the shielding can is fixed, particularly soldered, to a printed circuit board.

16. Method according to one of the claims 14 or 15,
**characterized in that**
the transducer unit (12) is soldered to the shielding can, particularly by means of at least one clip provided thereon.

17. Method according to one of the claims 1 to 16,
**characterized in that**
the bush (16) is brought into a positive and/or non-positive engagement, particularly a locking engagement with a printed circuit board.

## Revendications

1. Procédé de fabrication d'une unité transductrice angulaire pour un appareil de commutation angulaire (10),
dans lequel un élément transducteur (13) est inséré dans une douille coudée (16) et y est fixé,
***caractérisé en ce que***
l'élément transducteur (13) est mis en prise orientée avec un logement (44) de transducteur formé dans un outil (40), **en ce que**, pour un positionnement précis par rapport à l'élément transducteur (13), la douille (16) est ensuite mise en prise orientée, au moins partiellement par engagement positif, avec un logement (46) de douille réalisé de manière appropriée dans l'outil (40),
**en ce que**, pour terminer l'unité transductrice (12), l'élément transducteur (13) est fixé dans la douille (16),
**en ce que** le logement (44) de transducteur est formé au moins partiellement par un organe de centrage de transducteur qui est inséré dans un corps de base (42) d'outil ou y est posé, et/ou
**en ce que** le logement (46) de douille est formé au moins partiellement par un organe (54) de centrage de douille qui est inséré dans le corps de base (42) d'outil de l'outil (40) ou y est posé.

2. Procédé selon la revendication 1,
***caractérisé* en ce que**
l'élément transducteur (13) est fixé par rapport à l'outil (40).

3. Procédé selon la revendication 2,
***caractérisé en ce que***
l'élément transducteur (13) est fixé par une dépression, par un adhésif, en particulier un ruban adhésif (56), et/ou par des aimants.

4. Procédé selon l'une quelconque des revendications 1 à 3,
***caractérisé en ce que***
l'organe de centrage de transducteur et/ou l'organe (54) de centrage de douille est ou sont fixé(s) par rapport au corps (42) de base d'outil.

5. Procédé selon la revendication 4,
***caractérisé en ce que***
l'organe de centrage de transducteur et/ou l'organe (54) de centrage de douille est ou sont fixé(s) par un adhésif, en particulier un ruban adhésif, par une dépression et/ou par des aimants (52).

6. Procédé selon l'une quelconque des revendications 3 à 5,
***caractérisé en ce que***
l'élément transducteur (13) est aspiré contre l'outil (40) par l'intermédiaire d'au moins un canal d'aspiration (60) formé dans le corps (42) de base d'outil.

7. Procédé selon l'une quelconque des revendications 3 à 6,
***caractérisé en ce qu'***
un équilibrage de pression se fait par l'intermédiaire de canaux d'équilibrage (62) prévus dans le corps (42) de base d'outil dans des zones (15) radialement extérieures d'un élément transducteur (13) aspiré.

8. Procédé selon l'une quelconque des revendications 1 à 7,
***caractérisé en ce que***
l'organe de centrage de transducteur est retiré avant la fixation de l'élément transducteur (13) dans la douille (16).

9. Procédé selon l'une quelconque des revendications 1 à 8,
***caractérisé en ce que***
l'élément transducteur (13) est fixé dans la douille (16) par moussage et/ou remplissage au moins partiel d'interstices (21).

10. Procédé selon l'une quelconque des revendications 1 à 9,
***caractérisé* en ce**
**qu'**un outil (40) est utilisé avec des gradins qui se mettent en prise en tant que butée avec une extrémité frontale (19) et/ou une embase reculée (18) de la douille (16).

11. Procédé selon l'une quelconque des revendications 1 à 10,
***caractérisé en ce que***
plusieurs unités transductrices (13) sont fabriquées parallèlement en utilisant un outil comportant une pluralité de logements de transducteur et de logements de douille.

12. Procédé selon l'une quelconque des revendications 1 à 11,
***caractérisé en ce que***
la douille (16) est fixée par rapport à l'outil (40), en particulier en utilisant un support (48) prévu sur l'outil (40).

13. Procédé selon l'une quelconque des revendications 1 à 12,
***caractérisé* en ce que**
plusieurs éléments transducteurs (13) sont insérés dans une douille coudée (16) et y sont fixés.

14. Procédé selon l'une quelconque des revendications 1 à 13,
***caractérisé* en ce**
**qu'**une calotte est enfoncée dans la douille (16) par engagement positif.

15. Procédé selon la revendication 14,
***caractérisé en ce que***
la calotte est fixée, en particulier soudée, sur un circuit imprimé.

16. Procédé selon l'une quelconque des revendications 14 ou 15,
***caractérisé* en ce que**
l'unité transductrice (12) est soudée à la calotte, en particulier par l'intermédiaire d'une patte prévue sur celle-ci.

17. Procédé selon l'une quelconque des revendications 1 à 16,
***caractérisé* en ce que**
la douille (16) est mise en prise par engagement positif et/ou par adhérence, en particulier une prise de crantage, avec un circuit imprimé.
